# EUROPEAN PATENT APPLICATION

(11) **EP 3 739 475 A1**
(43) Date of publication of application: **18.11.2020**
(21) Application number: 19382388.7
(22) Date of filing: 17.05.2019
(51) Int. Cl.: G06F 17/18, G06K 9/62

(54) **A COMPUTER IMPLEMENTED METHOD, A SYSTEM AND COMPUTER PROGRAMS FOR ANOMALY DETECTION USING NETWORK ANALYSIS**

(71) Applicant: Universitat Politècnica De Catalunya, 08034 Barcelona (ES)
(72) Inventor: AMIL MARLETTI, Pablo, 08227 Terrassa (ES); ALMEIRA, Nahuel, X5004 FLK Ciudad de Córdoba (AR); MASOLLER, Cristina, 08195 Sant Cugat del Vallès (ES)
(74) Representative: Juncosa Miró, Jaime

(57) **Abstract**

A method for anomaly detection using network analysis is provided. The method comprises representing a plurality of elements of a database as a graph, or distance matrix, each pair of elements being connected by a link that has associated a distance; and computing an anomaly score for each element by at least executing one of the following algorithms. An algorithm that eliminates each of said links in descending order, identifies the giant component and assigns to the elements that have been disconnected from said giant component an anomaly score equal to the value of the distance corresponding to the last link removed. A second algorithm that applies to the graph a dimensionality reduction procedure that returns, for each element, a new set of features in a r-dimensional space, calculates a new graph in the r-dimensional space, computes a similarity measure, Si, and defines an anomaly score as 1- Si.

## Description

### Technical Field

The present invention is directed, in general, to the field of computing systems. In particular, the invention relates to a computer implemented method for anomaly detection using network analysis.

### Background of the Invention

When working with big databases it is usual to have entries that don't really belong there. Sometimes because they were mislabeled, some automatic process failed (or introduced artifacts) when gathering data, or a file was corrupted in a computer system. It may also happen that items that appear not to belong are actually just legitimate, extreme cases. All of these are referred to as anomalies (also referred in this document as outliers).

There are many definitions for what an outlier is, and there is no formal definition extensively accepted. A simple way of expressing what an outlier is, is the following: outliers in data set are observations that were generated with a different process than that of the other (normal) observations. Of course this (and other definitions), are not immediate to check, given a data set a lot of assumptions need to be made.

Outlier/anomaly mining is important for diverse tasks regarding information processing in real systems, for example, for novelty finding, for detecting system malfunction behavior, fraudulent behavior, human errors, instrument errors, predictive maintenance, or even large natural deviations.

There are known patents and patent applications in this field.

US 9836183-B1 provides a process including obtaining a clustered graph having three or more clusters, each cluster having a plurality of nodes of the graph, the nodes being connected in pairs by one or more respective edges; determining visual attributes of cluster icons based on amounts of nodes in clusters corresponding to the respective cluster icons; determining positions of the cluster icons in a graphical visualization of the clustered graph; obtaining, for each cluster, a respective subset of nodes in the respective cluster; determining visual attributes of node icons based on attributes of corresponding nodes in the subsets of nodes, each node icon representing one of the nodes in the respective subset of nodes; determining positions of the node icons in the graphical visualization based on the positions of the corresponding cluster icons of clusters having the nodes corresponding to the respective node icons; and causing the graphical visualization to be displayed. Thus, this US patent is aimed at automatically extracting "insightful nodes" from graphs and requires first to obtain a "clustered graph". In each cluster, insightful nodes are those whose attribute has the lowest probability.

US 10205735-B2 discloses a graph-based network security analytic framework to combine multiple sources of information and security knowledge in order to detect risky behaviors and potential threats. In some examples, the input can be anomaly events or simply regular events. The entities associated with the activities can be grouped into smaller time units, e.g., per day. The riskiest days of activity can be found by computing a risk score for each day and according to the features in the day. A graph can be built with links between the time units. The links can also receive scoring based on a number of factors. The resulting graph can be compared with known security knowledge for adjustments. Threats can be detected based on the adjusted risk score for a component (i.e., a group of linked entities) as well as a number of other factors. Therefore, this document is related to activity discovery from events in a distributed (networked) data processing system. The input can be anomaly events or regular events and the detection of risky behavior and potential threats is based in splitting input user activity into smaller units.

EP 2884418 discloses a method for fraud detection in business transactions using network analysis. The method includes receiving a command for generating a network graph for an entity to be investigated for potential fraud. The network graph starts from the entity under investigation and branches outwards displaying other related entities. The entities are represented as nodes with the entity under investigation as an origin node and a relationship between the entities are represented as edges. Once the network graph is generated, a cycle detecting algorithm is executed to detect and mark cycles within the generated network graph. The marked cycles are highlighted to indicate occurrence of potential fraud.

Other methods for detecting anomalies/outliers are also known by KR 101186400-B1, KR 101693405-B1 and CN 109040130-A.

Most known methods are valid for rather specific datasets (activity events, business transactions, datasets with clustered structure, etc.). Therefore, new methods are needed to be applied to any collection of data and for which a metric can be defined, defining a distance between any pair of members of the dataset.

### Description of the Invention

To that end, present invention provides according to a first aspect a computer implemented method for anomaly detection using network analysis. The method comprises performing the following steps by a computer including one or more processors and at least one memory: representing a plurality of elements (e.g. anterior chamber images of healthy and non-healthy patients, credit cards transactions made by different cardholders, face images of different users with added artifacts, etc.) of a database as a graph, where each pair of elements is connected by a link that has associated the distance between the two elements, and computing an anomaly score for each element of the graph. Thus, the input to the method is a graph represented by a matrix where each element is the distance between two elements of the database.

According to the proposed method, said anomaly score can be computed by either of the two following algorithms.

A first one of the algorithms comprises i.1) eliminating, one by one, each of the cited links in descending order, such that the links between pair of elements corresponding to a higher distance are removed first; ii.1) after each link has been removed, identifying a giant component referring to the largest connected partition of the graph; and iii.1) assigning to the elements that have been disconnected from said giant component an anomaly score equal to the value of the distance corresponding to the last link removed, such that the first elements disconnected from the giant component are the ones with larger anomaly score and the last elements to leave have the lowest anomaly score. Thus, this first algorithm exploits the percolation transition in networks and is parameter-free (it does not require any training set, any predefined rule or knowledge).

The second algorithm to compute the anomaly score comprises i.2) applying to the graph (or input distance matrix) a dimensionality reduction procedure that returns, for each element, a new set of features in a r-dimensional space (r<M where M is the number of elements in the database); ii.2) calculating a new graph (or new distance matrix) in the r-dimensional space for each pair of elements; iii.2) for each element computing a similarity measure, Si, by comparing the (original) graph with the new calculated graph; and iv.2) defining the anomaly score as 1- Si. Thus, the second method is based on a dimensionality reduction procedure, such as the IsoMap algorithm. In an embodiment that uses a standard procedure, the method has only one parameter that has to be selected by using a training set: the number r of dimensions. In another embodiment that uses the IsoMap algorithm, the method has an additional parameter: the number of k-neighbors used by the algorithm. Thus in a training step, the second parameter can be selected appropriately, allowing for a significant improvement of the algorithm performance.

In an embodiment, the method further ranks the elements from a larger anomaly score to a lower anomaly score after said steps iii.1) or iv.2).

In yet another embodiment, the anomaly score is computed by executing both first and second algorithms. In this case, the method further comprises: after said step iii.1), ranking the elements from a larger anomaly score to a lower anomaly score; after said step iv. 2), ranking the elements from a larger anomaly score to a lower anomaly score; and combining both ranks, obtaining a combined rank, and implementing a mathematical function over the combined rank, for example the maximum function or the mean function.

Other embodiments of the invention that are disclosed herein also include a system and software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

### Brief Description of the Drawings

The previous and other advantages and features will be more fully understood from the following detailed description of embodiments, with reference to the attached figures, which must be considered in an illustrative and non-limiting manner, in which:
Fig. 1 is a flow chart illustrating a general embodiment of a method for anomaly detection.
Fig. 2 is a flow chart illustrating the first process that can be used for computing the anomaly score.
Fig. 3 is a flow chart illustrating the second process that can be used for computing the anomaly score.
Fig. 4 shows example images from a face database. Five normal images are showed at the top and five outlier images (with added artifacts) are showed at the bottom.
Fig. 5 shows examples from the OCT image database with the lowest (top) and with the highest (bottom) rank of anomaly scores, identified with the first process.
Fig. 6 shows examples from the OCT image database with the lowest (top) and with the highest (bottom) rank of anomaly scores, identified with the second process.

### Detailed Description of Preferred Embodiments

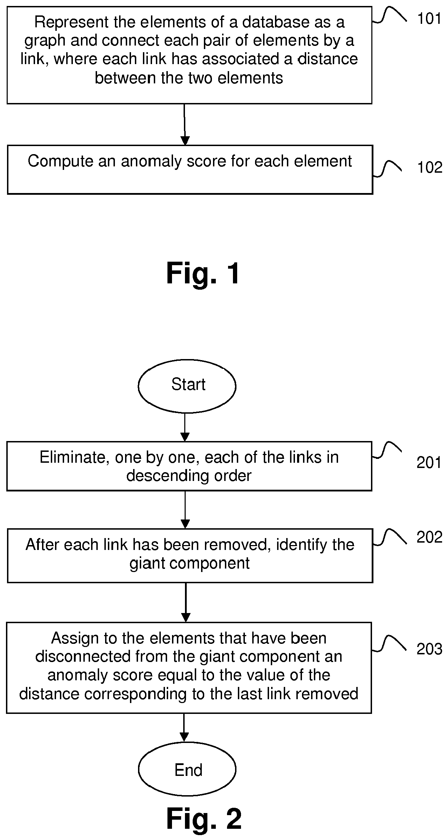

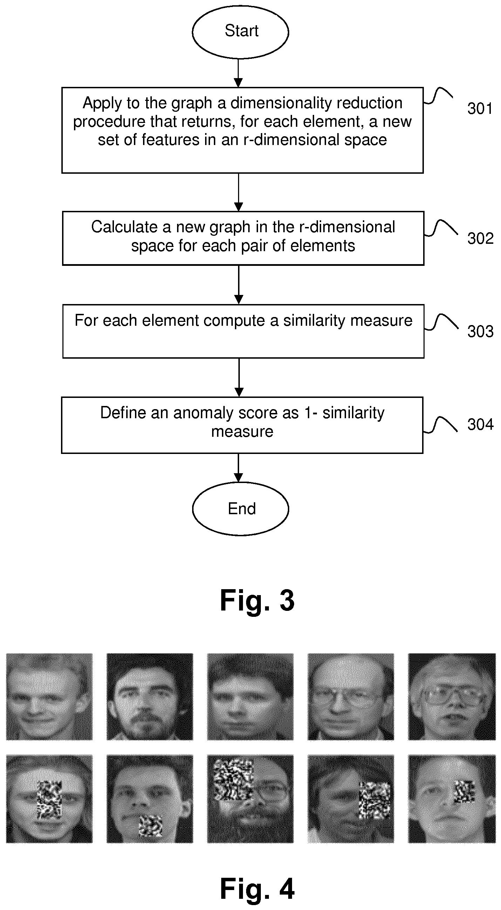

Referring to Fig. 1, this figure illustrates an embodiment of a method for anomaly detection using network analysis. The method is executed by a computer such as a PC, a server, etc. At step 101, the method comprises representing the elements of a database as a graph and connecting each pair of elements of the graph by a link having associated the distance between the two pair of elements. The elements may be anterior chamber images of healthy and non-healthy patients, credit cards transactions made by different cardholders or face images of different users with added artifacts, among others. Then, at step 102, the method computes an anomaly score for each element, for example as will be explained below, by executing either of the algorithms/processes described in Figs. 2 and 3 or by executing both.

With reference now to Fig. 2, therein it is illustrated an embodiment of the first algorithm/process provided for computing said anomaly score. The idea is to exploit the connectivity of the graph generated from the data of the database and the different distances between the elements. As seen in the figure, at step 201, each of the links are eliminated, one by one, in descending order, such that the links between pair of elements corresponding to a higher distance are removed first. Then, at step 202, after each link has been removed, a giant component is identified (which is the largest connected partition of the graph). This giant component is identified each time a link is removed. Finally, at step 203, the process assigns to the elements that have been disconnected from said giant component an anomaly score equal to the value of the distance corresponding to the last link removed. Proceeding in this way, the first elements disconnected from the giant component are the ones with larger anomaly score and the last elements to leave have the lowest anomaly score.

Optionally, the process of Fig. 2 can be run iteratively to break ties. If a set of elements leave the giant component in the same step, the algorithm can be run solely on those nodes to decide which one should have a greater anomaly score.

With reference to Fig. 3, therein it is illustrated an embodiment of the second algorithm/process provided for computing said anomaly score. In this case, the idea behind this process is to apply a dimensionality reduction procedure and evaluate how well each element fits in the new reduced space. Therefore, firstly, at step 301, a dimensionality reduction procedure that returns, for each element, a new set of features in a r-dimensional space is applied to the original graph (also termed distance matrix). Then, step 302, a new graph (or new distance matrix) in the r-dimensional space for each pair of elements is calculated. It should be noted that the distance measure in the r-space does not need to be the same as in the original space. Following, step 303, for each element, a similarity measure, Si, between the distances to all the other elements, i.e. between the (original) distance matrix and the new distance matrix, is computed. This is done by particularly applying a correlation function. At step 304, the anomaly score is defined as 1- Si. In this way, for "normal" elements high similarity is expected, while for "abnormal" elements low similarity is expected.

Optionally, the algorithm can preprocess the graph (or distance matrix) in the original space to approximate the geodesic distances, as in the IsoMap algorithm described in [3]. With this step, a preprocessed graph (or preprocessed distance matrix), is obtained which is used in step 302, instead of the (original) distance matrix. Step 303, is modified accordingly, comparing the preprocessed distance matrix and said new distance matrix.

As indicated above, the anomaly score can be also calculated by executing both first and second algorithms/processes. In this case (not illustrated), once the first and second algorithms have been run, the method further computes the ranks of each anomaly score, and combines these two anomaly scores by using the ranks. For example, the combined anomaly score can be the minimum rank obtained, the maximum, the mean, etc.

The proposed method was tested in several databases, in particular: a database of anterior chamber OCT images, a database of credit card transactions and a database of face images with added artifacts.

### Face database

A publicly available database was used constituted by face images (photographs of 40 subjects with 10 different images per subject) with anomalies/outliers that were added as in [2]: first the method rescaled the images to 64 by 64 pixels and then added a rectangle of noise to one randomly selected image per subject. Examples are shown in Fig. 4.

### Anterior chamber OCT images

This database consists of 1213 Optical Coherent Tomography (OCT) images of the anterior chamber of the eye of healthy and non-healthy patients of the Instituto de Microcirugia Ocular in Barcelona. The database was analyzed in Amil et al. [1] where an unsupervised algorithm for ordering the images was proposed. The images had been classified in four categories (closed, narrow, open, and wide open) by two expert ophthalmologists. By using manually extracted features, and the features returned by the unsupervised algorithm, a similar separation in the four classes was found. Here it will be demonstrated that the similarity is further improved when images containing artifacts (outliers) are removed from the dataset given to the unsupervised algorithm.

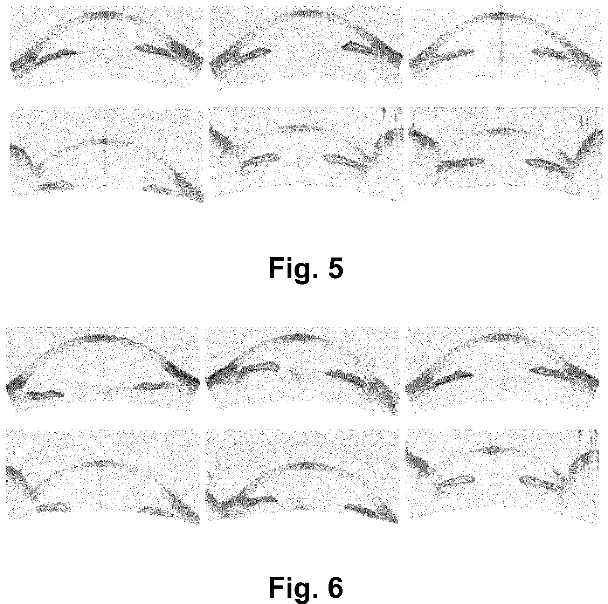

For the OCT database, there is no a priori definition of outliers, but depicting the images corresponding to higher outlier ranking in Figs. 5-6 it can be seen that they correspond to images with artifacts.

As removing outliers should improve the performance of machine learning algorithms, two tests were performed: first, the correlation metrics presented in [1] (table 1) were recalculated, for the two algorithms, as well as all their combinations. Second, random images were removed from the database and the same correlation metrics were recalculated. The results confirmed that removing the detected outliers improves the performance, while removing random images has no significant effect.

**Table 1.**

| Method | Mean angle | Chamber Depth | Manual classification |
|---|---|---|---|
| IsoMap, no alignment | 0.05 | 0.07 | 0.18 |
| IsoMap, aligned Euclidean | 0.79 | 0.88 | 0.77 |
| IsoMap, Hellinger | 0.80 | 0.89 | 0.79 |
| t-SNE, Hellinger | 0.80 | 0.90 | 0.81 |

### Credit card transactions

This publicly available database contains credit card transactions made in September 2013 by European cardholders. It contains 284807 transactions made in two days, of which 492 correspond to frauds. In order to preserve confidentiality, for each transaction the data set only includes the amount of money in the transaction, the time, and 28 features that are the output of a principal component analysis (PCA) of all the other metadata related to the transaction. In the proposed analysis the total dataset is divided into several sets according to the amount of the transaction and disregarded the time information, because the distances in the time axis are misleading for finding frauds, given that the time cut in the database is arbitrary.

In this database the ground truth (the fraud credit card transactions) is known and thus, the performance of the algorithms is quantified with the area under the ROC curve (AUC). The database was divided into several subsets according to the amount of money of each transaction (see table 2), and each set was further divided into train and test sets, the train set was used to set the parameters of the IsoMap algorithm such that maximizes the AUC and the test set was used to test the performance with the chosen parameters.

**Table 2.**

| Lower limit | Upper limit | Type | IsoMap | Percolation | MaxRank | MinRank | MeanRank | ProdRank |
|---|---|---|---|---|---|---|---|---|
| 850 | Inf | Train | 0.996 | 0.974 | 0.967 | 0.941 | 0.953 | 0.952 |
| 850 | Inf | Test | 0.863 | 0.747 | 0.823 | 0.802 | 0.816 | 0.809 |
| 550 | 850 | Train | 0.964 | 0.933 | 0.928 | 0.888 | 0.91 | 0.907 |
| 550 | 850 | Test | 0.935 | 0.938 | 0.95 | 0.933 | 0.944 | 0.943 |
| 410 | 550 | Train | 0.958 | 0.934 | 0.946 | 0.95 | 0.95 | 0.95 |
| 410 | 550 | Test | 0.637 | 0.845 | 0.823 | 0.705 | 0.751 | 0.741 |
| 330 | 410 | Train | 0.968 | 0.88 | 0.857 | 0.834 | 0.844 | 0.842 |
| 330 | 410 | Test | 0.958 | 0.837 | 0.94 | 0.877 | 0.912 | 0.896 |
| 280 | 330 | Train | 0.993 | 0.986 | 0.985 | 0.985 | 0.985 | 0.985 |
| 280 | 330 | Test | 0.926 | 0.858 | 0.902 | 0.901 | 0.903 | 0.902 |
| 240 | 280 | Train | 0.958 | 0.836 | 0.916 | 0.845 | 0.881 | 0.869 |
| 240 | 280 | Test | 0.978 | 0.994 | 0.996 | 0.983 | 0.988 | 0.988 |
| 209 | 240 | Train | 1 | 0.992 | 0.992 | 0.979 | 0.984 | 0.983 |
| 209 | 240 | Test | 0.764 | 0.996 | 0.995 | 0.863 | 0.925 | 0.907 |
| 185 | 209 | Train | 1 | 0.998 | 0.997 | 0.997 | 0.997 | 0.997 |
| 185 | 209 | Test | 0.906 | 0.799 | 0.888 | 0.844 | 0.878 | 0.869 |

The proposed algorithms have shown good performance on the used databases. Although the first algorithm has shown comparable to worse performance than previously proposed methods, it has the great advantage of being parameterless, thus it is possible to apply blindly to a data set without any knowledge or guesses about the structure. On the other hand, the second algorithm is the opposite. It can achieve great performance, better than previous methods, but two parameters have to be set, which make it difficult to apply blindly to data and its performance is closely related to the chosen parameters. As the examples show, there is no perfect algorithm that will work every time, especially due to the fact that the problem isn't well defined, being the base definition of outlier a non-formal one. The two algorithms have extra assumptions to those of being an outlier. The first algorithm assumes that the normal points will be in one cluster, with outliers being far from that big cluster; the second algorithm assumes that the normal points lye on a manifold, and that outliers lye outside of such manifold.

Examples of the method may be implemented by hardware, software, firmware, middleware, microcode, hardware description languages, or any combination thereof. When implemented in software, firmware, middleware, or microcode, the program code or code segments to perform the necessary tasks may be stored in a non-transitory computer-readable medium such as a storage medium. Processors may perform the described tasks.

Furthermore, the example examples described herein may be implemented as logical operations in a computing device in a networked computing system environment. The logical operations may be implemented as: (i) a sequence of computer implemented instructions, steps, or program modules running on a computing device; and (ii) interconnected logic or hardware modules running within a computing device.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

The scope of the present invention is defined in the following set of claims.

### References

[1] Amil, P., et al. "Unsupervised feature extraction of anterior chamber OCT images for ordering and classification". Scientific Reports 9, 151 1157 (2019). doi:10.1038/s41598-018-38136-8.
[2] Ju, F., et al. "Image outlier detection and feature extraction via L1-norm-based 2D probabilistic PCA". IEEE Trans. Image Processing 24, 4834-4846 2015.
[3] Tenenbaum, J. B., de Silva V. Langford J. C. "A global geometric framework for nonlinear dimensionality reduction". Science 290, 2319-2323 (2000).

## Claims

1. A computer implemented method for anomaly detection using network analysis, the method comprising performing the following steps by a computer:
- representing a plurality of elements of a database as a graph, each pair of elements being connected by a link that has associated the distance between the two elements; and
- computing an anomaly score for each element of the graph by at least executing one of the following algorithms:
- a first algorithm that:
i.1) eliminates, one by one, each of said links in descending order, such that the links between pair of elements corresponding to a higher distance are removed first;
ii.1) after each link has been removed, identifies a giant component referring to the largest connected partition of the graph; and
iii.1) assigns to the elements that have been disconnected from said giant component an anomaly score equal to the value of the distance corresponding to the last link removed, such that the first elements disconnected from the giant component are the ones with larger anomaly score and the last elements to leave have the lowest anomaly score;
- a second algorithm that:
i.2) applies to the graph a dimensionality reduction procedure that returns, for each element, a new set of features in a r-dimensional space;
ii.2) calculates a new graph in the r-dimensional space for each pair of elements;
iii.2) for each element computes a similarity measure, Si, by comparing the graph with the new graph; and
iv.2) defines an anomaly score as 1- Si.

2. The method of claim 1, wherein the distance between pair of elements is computed using the Euclidean distance.

3. The method of any of previous claims, wherein previous to said step i.2), the method comprises applying the IsoMap algorithm to the graph.

4. The method of claim of previous claims, wherein said similarity measure is computed by applying a correlation function.

5. The method of claim 1, wherein the method further comprises ranking the elements from a larger anomaly score to a lower anomaly score after said steps iii.1) or iv.2).

6. The method of claim 1, wherein the anomaly score is computed by executing both first and second algorithms, the method further comprising:
- after said step iii.1), ranking the elements from a larger anomaly score to a lower anomaly score;
- after said step iv. 2), ranking the elements from a larger anomaly score to a lower anomaly score; and
- combining both ranks, obtaining a combined rank, and implementing a mathematical function over the combined rank, the mathematical function comprising at least one of the following: a maximum function or a mean function.

7. The method of any of previous claims, wherein the elements of the database comprises: anterior chamber images of healthy and non-healthy patients, credit cards transactions made by different cardholders or face images of different users with added artifacts.

8. A computer system for anomaly detection using network analysis, comprising:
at least one memory; and
at least one processor communicatively coupled to the at least one memory, the at least one processor being configured to execute the method of any one of the claims 1 to 7.

9. A non-transitory computer readable medium storing instructions, which when executed by a computer cause the computer to perform the method of any one of the claims 1 to 7.
